# EUROPÄISCHE PATENTSCHRIFT

(11) **EP 0 670 643 B1**
(45) Veröffentlichungstag und Bekanntmachung des Hinweises auf die Patenterteilung: **22.06.2005**
(21) Anmeldenummer: 95100540.4
(22) Anmeldetag: 17.01.1995
(51) Int. Cl.: H04J 3/06, H04L 5/06

(54) **Verfahren und Schaltungsanordnung zur digitalen Rahmensynchronisation**
Method and circuit for digital frame synchronisation
Méthode et dispositif de synchronisation numérique du frâme

(30) Priorität: 23.02.1994 DE 4405752
(43) Veröffentlichungstag der Anmeldung: 06.09.1995
(73) Patentinhaber: Grundig Multimedia B.V., 1083HJ Amsterdam (NL)
(72) Erfinder: Zumkeller, Markus, GRUNDIG E.M.V., D-90762 Fürth (DE)
(74) Vertreter: Pröll, Jürgen

(56) Entgegenhaltungen:
- EP-A- 0 369 917
- WO-A-88/00417

## Beschreibung

Die Erfindung betrifft ein Verfahren zur digitalen Rahmensynchronisation nach dem Oberbegriff des Patentanspruchs 1 und eine Schaltungsanordnung zur Durchführung des Verfahrens gemäß dem Oberbegriff des Patentanspruchs 5.

Zur Verbesserung der Übertragungsqualität und zur besseren Nutzung der Übertragungsbandbreite werden zunehmend digitale Übertragungsverfahren eingesetzt. Bei der digitalen Rundfunkübertragung, unter der Abkürzung DAB (Digital Audio Broadcasting) für Hörfunk oder DVB (Digital Video Broadcasting) für Bild- und Tonübertragung bekannt, wird ein Mehrkanal-Übertragungsverfahren mit einer Rahmenstruktur benutzt. Die Verteilung der Übertragungsdaten kann dabei beispielsweise nach dem aus der WO 88/00417 bekannten COFDM-Verfahren auf eine Vielzahl von Trägerfrequenzen erfolgen.

Aus der EP 369 917 A2 ist ein Verfahren zur Synchronisation eines Empfängers für ein Mehrkanal-Übertragungssignal bekannt. Hierbei werden in jeden Übertragungsrahmen zwei Synchronisationssymbole eingefügt. Das erste Symbol wird Null-Symbol genannt, da in diesem Zeitschlitz kein Signal gesendet wird. Das Null-Symbol dient dabei zur Rahmensynchronisation im Empfänger. Das zweite Symbol wird zur Frequenzsynchronisation benutzt. Zur Auswertung des Null-Symbols wird ein Hüllkurven-Detektor benutzt, der in Abhängigkeit von der Empfangsleistung das Empfangssignal weiterleitet.

Bei der Verwendung eines Hüllkurven-Detektors ist von Nachteil, daß dieser nur schwer als digitales System realisiert werden kann. Dadurch kann er nur unter erhöhtem Aufwand integriert und monolithisch mit anderen Digitalschaltungen des Empfängers zusammengefaßt werden.

Aufgabe der vorliegenden Erfindung ist es daher, ein neues Verfahren und eine neue Schaltungsanordnung für eine digitale Rahmensynchronisation anzugeben.

Diese Aufgabe wird gemäß der Erfindung durch die in den Patentansprüchen 1 und 5 angegebenen Merkmale gelöst.

Die Vorteile der Erfindung liegen in dem überraschend einfachen Verfahren zur digitalen Rahmensynchronisation des Empfängers. Weiterhin kann durch das erfindungsgemäße Verfahren eine weitere Baugruppe des Empfängers digital realisiert werden.

Das erfindungsgemäße Verfahren nach Anspruch 2 weist den Vorteil auf, daß das Vorzeichen bei Verwendung des Zweier-Komplements durch das erste Bit eines Binärwertes dargestellt wird. Weiterhin von Vorteil ist, daß zur Gleichrichtung der Ausgangswerte des Analog/Digitalwandlers lediglich deren Invertierung erforderlich ist. Diese erfolgt, falls ein Ausgangswert negativ, d.h. das höchstwertige Bit gesetzt ist.

Das Verfahren nach Anspruch 3 weist den Vorteil auf, daß besonders einfach durch Verwenden von Filterkoeffizienten für unterschiedliche Übertragungs-Modes festgestellt werden kann, ob ein störungsfreies Synchronisationssignal vorliegt, oder ob andere Filterkoeffizienten verwendet werden müssen.

Das Verfahren nach Anspruch 4 weist den Vorteil auf, daß aufgrund der im Empfänger eingestellten Empfangsfrequenz nur eine begrenzte Anzahl Übertragungs-Modes und damit Filterkoeffizienten zur Synchronisation in Frage kommen. Dadurch reduziert sich der Zeitraum, der für die Synchronisation benötigt wird. Dadurch, daß mögliche Filterkoeffizienten in einem Speicher abgespeichert sind, kann die Synchronisation sehr schnell erfolgen, eine Berechnung der Filterkoeffizienten ist nicht erforderlich.

Die Schaltungsanordnung nach Anspruch 5 weist den Vorteil auf, daß die Auswertung des Null-Symbols zur Rahmensynchronisation sehr einfach und durch nur wenige Baugruppen digital realisiert wird.

Die Schaltungsanordnung nach Anspruch 6 weist den Vorteil auf, daß die für die digitale Rahmensynchronisation erforderlichen Baugruppen durch einen Prozessor realisiert werden. Dadurch ist es möglich, einen ohnehin vorhandenen Prozessor mitzubenutzen, wodurch keine zusätzlichen Baugruppen benötigt und die bisher zur analogen Rahmensynchronisation benötigten Baugruppen eingespart werden können.

Die Erfindung wird im folgenden anhand der in der Zeichnung dargestellten Ausführungsform näher beschrieben und erläutert. Es zeigen:
- Fig. 1a: ein Blockschaltbild der erfindungsgemäßen Rahmensynchronisation,
- Fig. 1b: ein Blockschaltbild einer alternativen schaltungstechnischen Realisierung der Rahmensynchronisation und
- Fig. 2: ein Ausgangssignal des Gleichrichters.

In Fig. 1a sind die für eine digitale Rahmensynchronisation erforderlichen Baugruppen eines Empfängers dargestellt. Das Empfangssignal wird zunächst in einem Tuner T ins Basisband oder in eine Zwischenfrequenzlage abgemischt und durch einen Analog/Digital-Wandler A/D in digitale Werte umgesetzt. Diese weisen bei einer Wortbreite des Analog/Digital-Wandlers A/D von 8 Bit im Zweier-Komplement einen Wertebereich zwischen -127 und 127 auf. Durch Darstellung dieser Werte im Zweier-Komplement kennzeichnet das höchstwertige Bit das Vorzeichen des jeweiligen Wertes.

In der Baugruppe Gleichrichtung GR wird daher zunächst das erste Bit (Most Significant Bit, MSB) jedes Binärwertes überprüft. Falls es gesetzt ist, so ist der Binärwert negativ und muß invertiert werden. Dies geschieht dadurch, daß alle Bits invertiert werden. Anschließend erfolgt eine Filterung, bei der ein durch die Gleichrichtung GR erzeugter niederfrequenter Anteil GA des Signals zur weiteren Verarbeitung durch ein Matched Filter MF herausgefiltert wird.

In Abhängigkeit von der Dauer des Nullsymbols und der Dauer eines Übertragungsrahmens wird durch die Gleichrichtung GR und Filterung im Matched Filter MF mindestens eine Grundschwingung charakteristischer Frequenz erzeugt. Die Frequenz(en) dieses niederfrequenten Anteils GA richten sich dabei nach der Form der Hüllkurve des Übertragungssignals und enthalten daher eine Information über den Übertragungs-Mode, die zur Rahmensynchronisation benutzt werden kann.

Die schaltungstechnische Umsetzung des Gleichrichters GR kann durch einen Schalter und einen Inverter erfolgen. Der Schalter wird durch das erste Bit, welches das Vorzeichen des Binärwertes kennzeichnet, gesteuert und leitet einen negativen Binärwert über einen Inverter, einen positiven nicht. Anschließend werden invertierter und nicht invertierter Binärwert dem Matched Filter MF zugeleitet. Alternativ besteht die Möglichkeit, die Gleichrichtung durch ein entsprechendes Programm, das von einem digitalen Signalprozessor ausgeführt wird, zu realisieren.

Das Matched Filter MF wird in seiner Filtercharakteristik den in den unterschiedlichen Übertragungs-Modes auftretenden Rahmenlängen angepaßt, indem der Durchlaßbereich des Matched Filters MF, das eine Bandpaßfilterung bewirkt, genau auf einen für den jeweiligen Übertragungs-Mode charakteristischen Anteil GA eingestellt wird. Dies geschieht dadurch, daß die Filterkoeffizienten des Matched Filters MF durch die Synchronisationseinrichtung SYNC, in der die Rahmenlänge ermittelt wird, festgelegt werden. Die für die unterschiedlichen Übertragungs-Modes vorgesehenen Filterkoeffizienten werden dabei aus einem Speicher ausgelesen, in den sie bei der Fertigung abgespeichert wurden. Die Auswahl der Filterkoeffizienten für die unterschiedlichen Rahmenlängen der Übertragungs-Modes kann in Abhängigkeit von der Empfangsfrequenz erfolgen, falls nicht bei jeder Empfangsfrequenz alle Übertragungs-Modes benutzt werden.

Bei einer Synchronisation wird daher zunächst eine erste Gruppe Koeffizienten von der Synchronisationseinrichtung SYNC im Matched Filter MF eingestellt und anschließend überprüft, ob ein störungsfreies Ausgangssignal vom Schwellwertschalter SCH ausgegeben wird. Dies ist dann der Fall, wenn zumindest ein Teil des niederfrequente Anteils GA des Empfangssignals im Durchlaßbereich des Matched Filters MF liegt. Ist dies nicht der Fall, so wird die nächste Gruppe Filterkoeffizienten eingestellt u.s.w., bis ein möglichst störungsfreies Ausgangssignal des Schwellwertschalters SCH vorliegt. Dabei werden Filterkoeffizienten der Übertragungs-Modes aus dem Speicher ausgelesen, die bei der eingestellten Empfangsfrequenz vom Sender benutzt werden können.

Sobald der niederfrequente Signalanteil GA im Schwellwertschalter SCH einen bestimmten Wert überschreitet, der im wesentlichen aufgrund von Fading und Rauschen erforderlich ist, kann davon ausgegangen werden, daß ein Empfangssignal und kein Null-Symbol vorliegt. Daher wird dieses Signal als Synchronisationssignal für die Synchronisationseinrichtung SYNC verwendet.

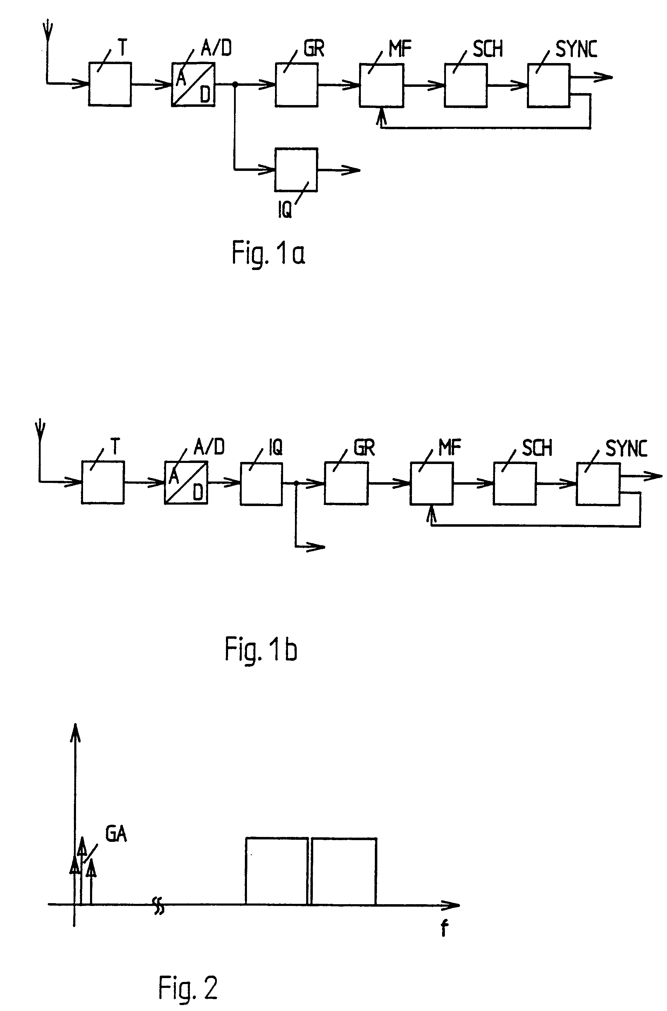

Fig. 1b zeigt eine alternative schaltungstechnische Realisierung der Rahmensynchronisation. Im Unterschied zu Fig. 1a wird hier erst das in zueinander orthogonale I- und Q-Komponenten aufgeteilte Empfangssignal für die digitale Rahmensynchronisation benutzt. In der weiteren Verfahrensweise sowie in der dafür benutzten Schaltungsanordnung ergeben sich dadurch jedoch keine Änderungen.

Fig. 2 zeigt das Ausgangssignal des Gleichrichters über der Frequenz f aufgetragen. Man erkennt den niederfrequenten Signalanteil GA des Signals und das restliche gleichgerichtete Übertragungssignal, das durch das Matched Filter MF herausgefiltert wird. Anschließend wird nur der niederfrequente Signalanteil GA dem Schwellwertschalter SCH zugeleitet.

## Patentansprüche

1. Verfahren zur digitalen Rahmensynchronisation eines Übertragungssignals, das nach einem Mehrkanal-Übertragungsverfahren, insbesondere COFDM-Verfahren, erzeugt wird und eine Rahmenstruktur aufweist, wobei die Amplitude des Empfangssignals in einem oder mehreren Zeitschlitzen des Übertragsrahmens ausgewertet wird, wobei nach der Umsetzung des Empfangssignals eine Analog-/Digital-Wandlung vorgenommen wird,
**dadurch gekennzeichnet,**
**dass** die Analog-/Digital-Wandlung nach einer Umsetzung des Empfangssignals ins Basisband oder in eine Zwischenfrequenzlage vorgenommen wird, dass das digitale Signal gleichgerichtet wird, dass das gleichgerichtete Signal in einem Matched Filter (MF) gefiltert wird und dass das gefilterte Signal zur Steuerung der Rahmensynchronisation (SYNC) verwendet wird.

2. Verfahren nach Anspruch 1,
**dadurch gekennzeichnet,**
**dass** bei der Analog-/Digital-Wandlung Werte im Zweier-Komplement erzeugt werden und dass bei der anschließenden Gleichrichtung jeder negative Wert invertiert wird.

3. Verfahren nach Anspruch 1 oder 2,
**dadurch gekennzeichnet,**
**dass** zur Abstimmung auf einen Übertragungs-Mode, in welchem die Übertragung erfolgt, Filterkoeffizienten des Matched Filters (MF) durch die Synchronisationseinrichtung (SYNC) eingestellt werden, wodurch das Matched Filter (MF) auf die niederfrequenten Anteile (GA) des gewählten Übertragungs-Modes abgestimmt wird, und dass das Ausgangssignal des Schwellwertschalters (SCH) von der Synchronisationseinrichtung (SYNC) ausgewertet wird, um eine Synchronisation zu erkennen.

4. Verfahren nach Anspruch 3,
**dadurch gekennzeichnet,**
**dass** die Filterkoeffizienten des Matched Filters (MF) in einem Speicher abgespeichert werden und dass in Abhängigkeit von der gewählten Empfangsfrequenz zulässige Filterkoeffizienten aus dem Speicher ausgewählt werden.

5. Schaltungsanordnung zur digitalen Rahmensynchronisation mit einem Analog-/Digital-Wandler (A/D), welcher das Empfangssignal digitalisiert,
**gekennzeichnet durch**,
den Analog-/Digital-Wandler (A/D) der das Empfangssignal im Basisband oder in einer Zwischenfrequenzlage digitalisiert, einen nachgeschalteten Gleichrichter (GR), welcher das digitale Signal gleichrichtet, ein nachgeschaltetes Matched-Filter (MF), welches das gleichgerichtete Signal filtert und einen nachgeschalteter Schwellwertschalter (SCH), dessen Ausgangssignal als Steuersignal für die Rahmensynchronisation dient.

6. Schaltungsanordnung nach Anspruch 5,
**dadurch gekennzeichnet,**
**dass** der Gleichrichter (GR), das Matched Filter (MF), der Schwellwertschalter (SCH) und die Synchronisationseinrichtung (SYNC) durch einen Prozessor realisiert sind.

## Claims

1. Method for the digital frame synchronization of a transmission signal that is generated by a multichannel transmission method, in particular COFDM method, and has a frame structure, wherein the amplitude of the received signal is evaluated in one or more timeslots of the transmission frame, wherein an analog/digital conversion is performed after the conversion of the received signal, **characterized in that** the analog/digital conversion is performed after the conversion of the received signal into the baseband or into an intermediate-frequency position, **in that** the digital signal is rectified, **in that** the rectified signal is filtered in a matched filter (MF) and **in that** the filtered signal is used to control the frame synchronization (SYNC).

2. Method according to Claim 1, **characterized in that**, in the analog/digital conversion, values are generated in the twos complement and **in that**, during the subsequent rectification, every negative value is inverted.

3. Method according to Claim 1 or 2, **characterized in that**, to tune to a transmission mode in which the transmission takes place, filter coefficients of the matched filter (MF) are adjusted by the synchronization device (SYNC), as a result of which the matched filter (MF) is tuned to the low-frequency components (GA) of the chosen transmission mode, and **in that** the output signal of the threshold value switch (SCH) is evaluated by the synchronization device (SYNC) in order to detect a synchronization.

4. Method according to Claim 3, **characterized in that** the filter coefficients of the matched filter (MF) are stored in a memory and **in that**, as a function of the chosen receiving frequency, permissible filter coefficients are selected from the memory.

5. Circuit arrangement for digital frame synchronization comprising an analog/digital converter (A/D) that digitizes the received signal, **characterized by** the analog/digital converter (A/D) that digitizes the received signal in the baseband or in an intermediate-frequency position, a downstream rectifier (GR) that rectifies the digital signal, a downstream matched filter (MF) that filters the rectified signal and a downstream threshold switch (SCH) whose output signal serves as control signal for the frame synchronization.

6. Circuit arrangement according to Claim 5, **characterized in that** the rectifier (GR), the matched filter (MF), the threshold switch (SCH) and the synchronization device (SYNC) are implemented by a processor.

## Revendications

1. Procédé de synchronisation numérique de trames d'un signal de transmission, qui est produit selon un procédé de transmission à canaux multiples, notamment un procédé COFDM, et comporte une structure de trame, selon lequel l'amplitude du signal de réception est évaluée dans un ou plusieurs créneaux temporels de la trame de transmission, et selon lequel une conversion analogique/numérique est réalisée avec la conversion du signal de réception, **caractérisé en ce**
**que** la conversion analogique/numérique est réalisée avec une conversion du signal de réception dans la bande de base ou dans une position de fréquence intermédiaire, que le signal numérique est redressé, que le signal redressé est filtré dans un filtre Matched Filter (MF), c'est-à-dire un filtre adapté, et que le signal filtré est utilisé pour la commande de la synchronisation de trame (SYNC).

2. Procédé selon la revendication 1, **caractérisé en ce que** lors de la conversion analogique/numérique, des valeurs sont produites dans le complément à deux et que lors du redressement ultérieur, chaque valeur négative est inversée.

3. Procédé selon la revendication 1 ou 2, **caractérisé en ce que** pour le réglage sur un mode de transmission, dans lequel la transmission s'effectue, des coefficients du filtre Matched Filter (MF), sont réglés par le dispositif de synchronisation (SYNC), ce qui a pour effet que le filtre adapté (MF) est accordé sur les composantes à basses fréquences (GA) du mode de transmission sélectionné, et que le signal de sortie du commutateur à valeur de seuil (SCH) est évalué par le dispositif de synchronisation (SYNC) pour identifier une synchronisation.

4. Procédé selon la revendication 3, **caractérisé en ce que** les coefficients du filtre adapté (MF) sont mémorisés dans une mémoire et que des coefficients de filtre admissibles sont sélectionnés à partir de la mémoire en fonction de la fréquence de réception sélectionnée.

5. Montage pour la synchronisation numérique de trames comportant un convertisseur analogique/numérique (A/D), qui numérise le signal de réception, **caractérisé en ce que** le convertisseur analogique (A/D), qui numérise le signal de réception dans la bande de base ou dans une position de fréquence intermédiaire, contient un redresseur (GR) branché en aval, qui redresse le signal numérique, un filtre adapté (MF) branché en aval, qui filtre le signal redressé et un commutateur à valeur de seuil (SCH) branché en aval, dont le signal de sortie est utilisé comme signal de commande pour la synchronisation de trame.

6. Montage selon la revendication 5, **caractérisé en ce que** le redresseur (GR), le filtre adapté (MF), le commutateur à valeur de seuil (SCH) et le dispositif de synchronisation (SYNC) sont réalisés au moyen d'un processeur.
